# EUROPEAN PATENT SPECIFICATION

(11) **EP 2 923 901 B1**
(45) Date of publication and mention of the grant of the patent: **22.04.2020**
(21) Application number: 13856810.0
(22) Date of filing: 19.11.2013
(51) Int. Cl.: B60S 1/34

(54) **WIPER ARM**
WISCHERARM
BRAS D'ESSUIE-GLACE

(30) Priority: 21.11.2012 JP 2012255180
(43) Date of publication of application: 30.09.2015
(73) Proprietor: Denso Wiper Systems, Inc., Kosai-shi Shizuoka 431-0493 (JP)
(72) Inventor: OUCHI katsuhiro, Kazo-shi Saitama 347-8585 (JP); HAYAKAWA Seiichi, Kazo-shi Saitama 347-8585 (JP); SHIRAISHI Yuichi, Kazo-shi Saitama 347-8585 (JP)
(74) Representative: Barker Brettell LLP
(86) International application number: PCT/JP2013/081171
(87) International publication number: WO 2014/080909

(56) References cited:
- JP-A- 2006 213 325
- JP-A- 2006 213 325
- JP-A- 2009 090 802
- JP-A- 2009 090 802

## Description

### [Technical Field]

The present invention relates to a wiper arm including an arm main body pivotably connected to an arm head, and more particularly to a wiper arm wherein the rotation angle of the arm main body can be appropriately restricted as necessary.

### [Background Art]

A wiper arm used in a wiper apparatus generally includes an arm head, a retainer, or an arm main body, pivotably connected to the arm head, and a return spring disposed between the arm head and the retainer.

The arm head is a member which constitutes a proximal end portion of the wiper arm. The arm head is linked with driving means (a driving motor) of the wiper apparatus.

The retainer is an elongated member retaining a wiper blade and is provided at its distal end with a connecting structure for connecting the wiper arm to a wiper blade. The retainer is pivotably connected at its distal end to the arm head through a connection shaft so that the retainer is rotatable between an operational position and an upright position. In the operational position, the retainer extends straightly in an approximately horizontal direction from the arm head. In the upright position, the retainer is raised to be upright with respect to the arm head. With this construction, when the wiper apparatus is operating, the retainer is positioned in its operational position so that the wiper blade retained by means of the retainer is disposed along a surface to be wiped (for example, a windshield glass of an automobile). On the other hand, when, for example, washing the vehicle, the retainer is positioned in its upright position so that the wiper blade retained by means of the retainer is disposed in a position separated from the surface to be wiped.

When the retainer is positioned in the vicinity of its operational position, the return spring functions to pull back the retainer to its operational position. On the other hand, when the retainer is in the vicinity of its upright position, the return spring functions to pull back the retainer to its upright position. Accordingly, when the wiper apparatus is used (during a wiping operation), the retainer is positioned in the vicinity of its operational position so that the return spring acts to pull back the retainer toward its operational position side, and therefore the wiper blade retained by means of the wiper arm is pressed against the surface to be wiped with a moderate pressing force. On the other hand, when, for example, washing a vehicle, the retainer is moved into its upright position to be continuously locked back in its upright position by the spring force of the return spring (referred to as "locked back condition").

Some types of washing apparatuses used for washing vehicles are operated in a situation in which the retainer remains disposed in its operational position and therefore the wiper arm is positioned in its locked back condition. When such kind of washing apparatus is used for washing vehicles, a washing member may come into contact with the wiper blade or the wiper arm so that the retainer may be moved toward its upright position from its operational position. In such a case, if the rotation angle of the retainer reaches an angle at which the return spring switches to urge the retainer toward its upright position side, the wiper arm is brought into its locked back condition by the spring force of the return spring. As a result of such movement, the wiper arm may be damaged.

To overcome the above described problem, Japanese Patent Laid-Open No. 2002-362326 teaches a wiper arm including rotation restricting means for restricting the rotation of an arm member (or a retainer). In the wiper arm of this publication, a head cover covering an arm head is provided with a stopper wall which limits the rotation of the arm member to a predetermined angle by contacting with the arm member. Furthermore, we are aware of the Japanese patent application published as JP 2009-090802, which discloses a wiper arm provided with an arm head fixing a base end by a pivot shaft and having a spindle on an end, a retainer having a base end rotatably supported by the spindle and a wiper blade attached to an end thereof, and an arm spring interposed between the arm head and the retainer and pressing and energizing the end of the retainer to a wiping surface.

JP2006 213 325 A1 discloses a wiper arm according to the preamble of claim 1.

### [Citation List]

### [Patent Literature]

[PTL1]
Japanese Patent Laid-Open No. 2002-362326

### [Summary of Invention]

### [Technical Problem]

In the wiper arm disclosed in the aforementioned publication, the stopper wall for rotation restriction is formed as an integral part of the head cover, and therefore it is necessary to detach the head cover from the arm head when the wiper arm is locked back. Accordingly, in an operating environment in which wiper arms is used in its locked back condition, for example, when washing vehicles, it is necessary to detach the head covers from the arm heads in every time the wiper arms are moved to the locked back condition. This causes inconvenience to users. To avoid such inconvenience, a wiper arms having a head cover without a stopper wall can be provided to an operation environment wherein the wiper arm is not used in its locked back condition (for example, the European market), while providing a wiper arm having a head cover with a stopper wall to an operation environment wherein the wiper arms may be used in its locked back condition (for example, the Japanese market). This, however, is inefficient because two types of head covers are necessary for the same type of wiper arms.

The aforementioned publication further discloses, as another embodiment, a wiper arm including a head cap functioning as a rotation restricting member. In this embodiment, the head cap is selectively disposed between a position for restricting the rotation of an arm member and a position for permitting the arm member to rotate to its upright position. Such a special construction, however, causes the increase of the cost of manufacturing because significant changes of the structure of a wiper arm are necessary. In addition, the head cap having such a complicated structure is apparently no use for a wiper arm used in the operating environment in which the wiper arm is not used in its locked back condition.

In view of the foregoing problems, it is an object of the present invention to provide a wiper arm including an arm main body pivotably connected to an arm head, wherein the rotation angle of the arm main body is appropriately restricted while minimizing changes of the structure of the wiper arm from that of a wiper arm capable to be positioned in its locked back condition.

### [Solution to Problem]

According to the present invention there is provided a wiper arm including an arm main body capable of retaining a wiper blade, and an arm head pivotably connected to the arm main body through a connecting shaft so that the arm main body is pivotable between an operational position and an upright position, the wiper arm further comprising a rotation restricting member pivotally connected to the arm head through a pivot shaft, said rotation restricting member being pivotable around the pivot shaft to be selectively positioned between a rotation restricting position and a rotation permitting position, wherein said rotation restricting member contacts with the arm main body so as to restrict the rotation angle of the arm main body when disposed in said rotation restricting position, while said rotation restricting member does not restrict the rotation angle of the arm main body when disposed in said rotation permitting position.

The arm head includes a pedestal section on which said rotation restricting member is mounted when said rotation restricting member is in said rotation restricting position, said pedestal section supporting a component force in a direction perpendicular to the longitudinal direction of said wiper arm of a force exerted on said rotation restricting member from said arm main body when the rotation of the arm main body is restricted.

The wiper arm may include a fitting protrusion formed on one of said rotation restricting member and said pedestal section, and a fitting concavity formed in the other one of said rotation restricting member and said pedestal section, said fitting protrusion adapted to be fit into said fitting concavity when said rotation restricting member is disposed in said rotation restricting position.

The arm head may include a support surface being approximately perpendicular to the longitudinal direction of the wiper arm, said rotation restricting member contacting said support surface when said rotation restricting member is disposed in said rotation restricting position so that said support surface supports a component force in a direction perpendicular to the longitudinal direction of said wiper arm of a force exerted on said rotation restricting member from said arm main body when the rotation of the arm main body is restricted.

The pedestal section may be adapted to retain said arm main body in said upright position by contacting with said arm main body when said arm main body is positioned in said upright position.

The arm head may include a pair of head arm sections disposed on the both sides of the proximal end section of said arm main body, and said pivot shaft is provided on each of the inside surfaces of said pair of head arm sections.

The arm head may include a mounting section on which the rotation restricting member is mounted, and said pivot shaft is provided on each of the both side surfaces of said mounting section.

The rotation restricting member may be detachably attached to said arm head.

The arm head comprises an arm head body and a head cover covering the arm head body, and said rotation restricting member is housed within the inside of said head cover.

The head cover may be adapted to cover the entirety of said arm head body when said rotation restricting member is disposed in said rotation restricting position.

### [Advantageous Effects of Invention]

According to the present invention, the wiper arm (for example, a wiper arm 1) includes the rotation restricting member (for example, a rotation restricting member 30) restricting the rotation of the arm main body (for example, a retainer 3) so as not to exceed a predetermined angle. The rotation restricting member is adapted to be pivotable around a pivot shaft (for example, a pivot shaft 16) between a rotation restricting position and a rotation permitting position. Accordingly, the rotation angle of the arm main body is appropriately restricted within a predetermined angle by means the rotation restricting member disposed in the rotation restricting position to effectively prevent any damages of the wiper arm caused by the unintentional movement of the wiper arm to its locked back condition, for example, when washing the vehicle. On the other hand, by merely carrying out a simple operation to rotate the rotation restricting member to the rotation permitting position, the arm main body can be positioned in its upright position and the wiper arm can be positioned in its locked back condition, as necessary.

The wiper arm of the present invention is different from a wiper arm of the conventional structure in that the wiper arm of the present invention includes a pivot shaft. The wiper arm can also be constructed by merely mounting the rotation restricting member to the pivot shaft. Accordingly, the wiper arm of the present invention is obtained through a minimal structural change from a wiper arm of the conventional structure, and therefore the wiper arm functioning to restrict the rotation of the arm main body can be provided at a low cost.

The wiper arm of the present invention is structurally different form a wiper arm of the conventional structure only in that the wiper arm of the present invention includes a pivot shaft, if the rotation restricting member has been detached from the pivot shaft. Therefore, the structural difference between the wiper arm of the present invention and the conventional wiper arm is very small. Accordingly, regarding manufacture and sales of wiper arms, it is possible to manufacture only some type of wiper arms having the pivot shafts so that such types of wiper arms with the rotation restricting member are distributed in markets in which the restriction of the rotation of the arm main body is required, while such types of wiper arms without the rotation member are distributed in markets in which the restriction of the rotation of the arm main body is not required. Therefore, there is no need to distinguish a wiper arm with a rotation restricting function and a wiper arm without a rotation restricting function in manufacturing. As a result the cost of manufacturing can be reduced.

When the rotation restriction member is positioned in its rotation restricting position, the rotation restricting member may be supported on the pedestal section (for example, a pedestal section 17) so that the pedestal section can appropriately support a component force in a perpendicular direction (vertical direction) to the longitudinal direction of the wiper arm of a force which is generated for restricting the rotation of the arm main body and is exerted on the rotation restricting member from the arm main body. Accordingly, the structure of the wiper arm for rotation restriction has sufficient strength, and the arm main body is surely supported by means of rotation restricting member.

When the rotation restriction member is positioned in its rotation restricting position, the fitting protrusion (for example, a fitting concavity 34) which is provided on one of the rotation restricting member and the pedestal section may fit into the fitting concavity (for example, a fitting concavity 17B) which is provided in the other one of the rotation restricting member and the pedestal section so that the rotation restricting member is stably positioned in its rotation restricting position, and the strength of the structure for rotation restriction is improved.

The arm head may includes the support surface (for example, a support surface 11A) which is approximately perpendicular to the longitudinal direction of the wiper arm so that the rotation restricting member contacts against the support surface when positioned in its rotation restricting position. With this construction, the support surface can appropriately support the component force in the longitudinal direction of the wiper arm of a force exerted on the rotation restricting member from the arm main body when the rotation of the arm main body is restricted, and therefore the structure of the wiper arm for rotation restriction has sufficient strength and can firmly support the arm main body by means of the rotation restricting member.

The rotation restricting member may be detachably attached to the arm head so that the wiper arm can be used, in accordance with its operating environment, as a wiper arm which can be locked back or as a wiper arm in which the rotational range of the retainer 3 is restricted by attaching or detaching the rotation restricting member without changing any other parts of the wiper arm. Accordingly, users of the wiper arm can freely change the function of the wiper arm by attaching or detaching the rotation restricting member by themselves in accordance with the environment in which the wiper arm is used, and the flexibility and facility in usage of the wiper arm is improved.

The arm head may include the arm head body (for example, an arm head body 2) and the head cover (for example, a head cover 4) covering the arm head body, and the rotation restricting member may be housed within the inside of the head cover. With this construction, the rotation restricting member can be positioned in a position in which the rotation restricting member is entirely covered. Therefore, a wiper arm having a rotation restricting function can be formed to have the same external appearance as that of a conventional wiper arm.

### [Brief Description of Drawings]

[Figure 1] Figure 1 is a cross sectional side view of a wiper arm according to a first embodiment of the present invention, in which a rotation restricting member is disposed in its rotation restricting position, and a retainer is disposed in its operational position.
[Figure 2] Figure 2 is a side view of the wiper arm according to the first embodiment, in which the retainer is disposed at its operational position.
[Figure 3] Figure 3 is a cross-sectional side view of the wiper arm according to the first embodiment, in which the rotation of the retainer is restricted by means of the rotation restricting member disposed in its rotation restricting position.
[Figure 4] Figure 4 is a cross-sectional side view of the wiper arm according to the first embodiment, in which the rotation restricting member is disposed in its rotation permitting position, and the retainer is disposed in its operational position.
[Figure 5] Figure 5 is a cross-sectional side view of the wiper arm according to the first embodiment, in which the rotation restricting member is disposed in its rotation permitting position, and the retainer is disposed in its upright position.
[Figure 6] Figure 6 is a perspective view illustrating a proximal end portion of the wiper arm according to the first embodiment, in which the rotation restricting member has been detached from the proximal end portion.
[Figure 7] Figure 7 is a perspective view of the rotation restricting member according to the first embodiment.
[Figure 8] Figure 8 is a perspective view of the proximal end portion of the wiper arm according to the first embodiment, in which the rotation restricting member is mounted on the proximal end portion.
[Figure 9] Figure 9 is a side view of the proximal end portion of the wiper arm according to the first embodiment.
[Figure 10] Figure 10 is a sectional view of the proximal end portion of the wiper arm according to the first embodiment, showing a cross-section along a line A-A in Figure 9.
[Figure 11] Figure 11 is a cross-sectional side view of the proximal end portion of the wiper arm according to the first embodiment, in which the rotation of the retainer is restricted by means of the rotation restricting member positioned in its rotation restricting position.
[Figure 12] Figure 12 is a cross-sectional side view of the proximal end portion of the wiper arm according to the first embodiment, in which the rotation restricting member is disposed in its rotation permitting position, and the retainer is disposed in its operational position.
[Figure 13] Figure 13 is a cross-sectional side view of the proximal end portion of the wiper arm according to the first embodiment, in which the rotation restricting member is disposed in its rotation permitting position, and the retainer is disposed in its upright position.
[Figure 14] Figure 14 is a perspective view of a proximal end portion of a wiper arm according to a second embodiment of the present invention, in which a rotation restricting member has been detached from the proximal end portion.
[Figure 15] Figure 15 is a perspective view of the rotation restricting member according to the second embodiment.
[Figure 16] Figure 16 is a perspective view of the proximal end portion of the wiper arm according to the second embodiment, in which the rotation restricting member is mounted on the proximal end portion.
[Figure 17] Figure 17 is a side view of the proximal end portion of the wiper arm according to the second embodiment.
[Figure 18] Figure 18 is a sectional view of the proximal end portion of the wiper arm according to the second embodiment, showing a cross-section along a line B-B in Figure 17.

### [Description of Embodiments]

Embodiments of the present invention will now be described with reference to the accompanying drawings.

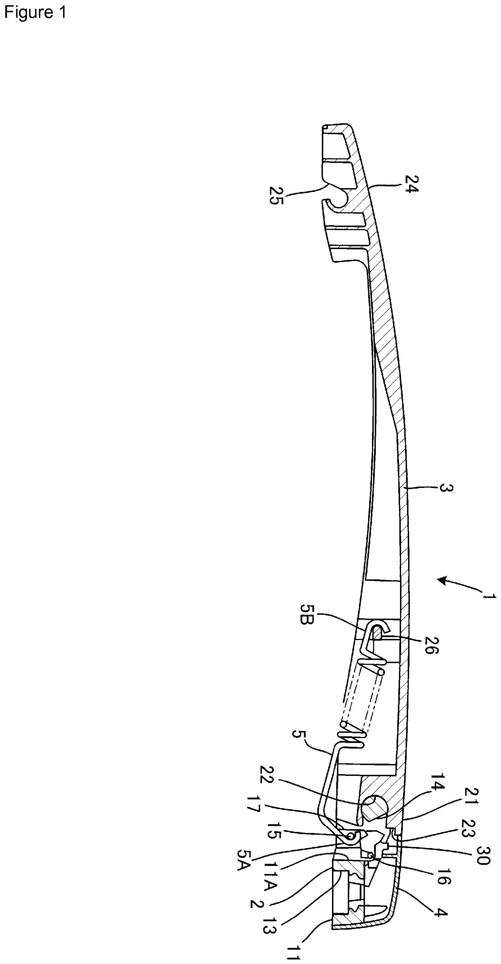

Figs 1 to 5 illustrate a wiper arm 1 according to a first embodiment of the present invention.

As shown in the drawings, the wiper arm 1 includes an arm head body 2, a retainer 3 pivotably connected to the arm head body 2, a head cover 4 adapted to cover the arm head body 2, and a return spring 5 disposed between the arm head body 2 and the retainer 3. In the present embodiment, the entireties of the arm head body 2, the retainer 3 and the head cover are generally formed of resin. The retainer 3 of this embodiment corresponds to the arm main body defined in the claims, and a set of the arm head body 2 and the head cover 4 of this embodiment corresponds to the arm head defined in the claims.

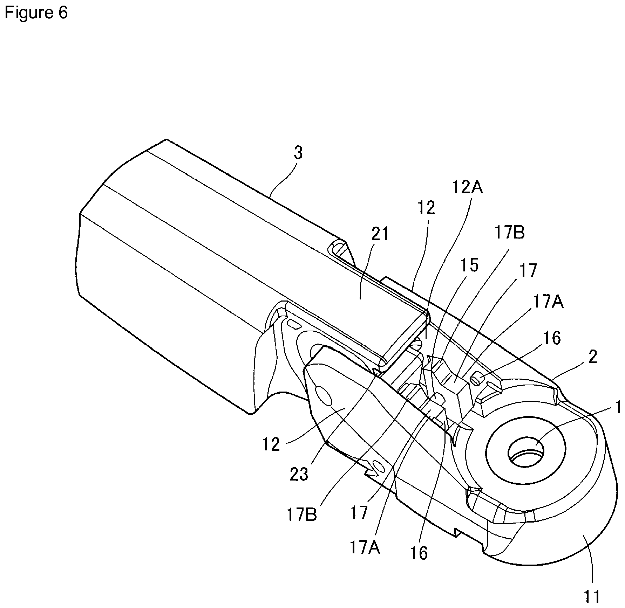

The arm head body 2 is a member disposed on a proximal end side of the wiper arm 1 and includes a head base portion 11 and a pair of head arm sections 12 extending forward (towards the retainer 3 side) from the head base portion 11 (see Figure 6 etc.). A connection shaft 14 extends in the transverse direction with respect to the longitudinal direction of the wiper arm 1 and is provided between the pair of head arm sections 12. The retainer 3 is pivotally connected to the connection shaft 14. A drive shaft hole 13 is formed to penetrate the head base portion 11 and extends in the vertical direction. The wiper arm is linked with driving means (not shown) through a drive shaft (not shown) disposed in the drive shaft hole 13. A front surface portion of the head base portion 11 forms a support surface 11A adapted to engage with a rotation restricting member 30 as will be described later so as to support the rotation restriction member 30.

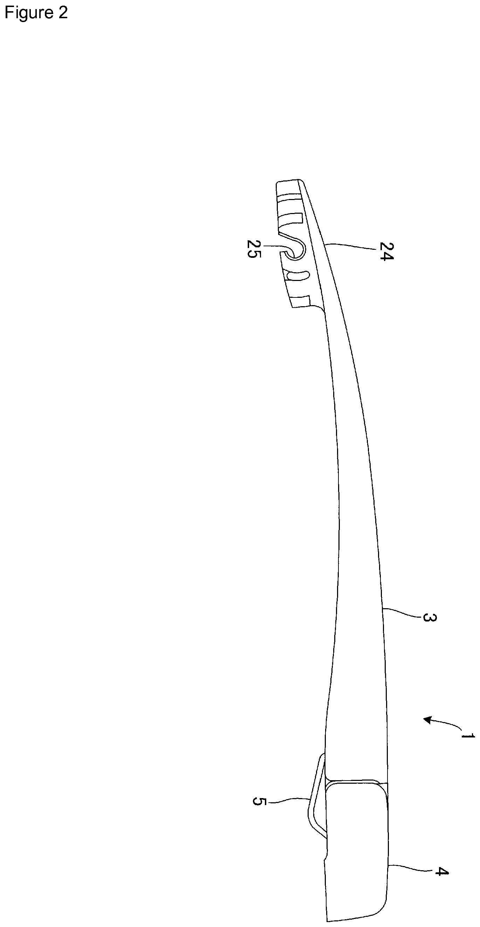

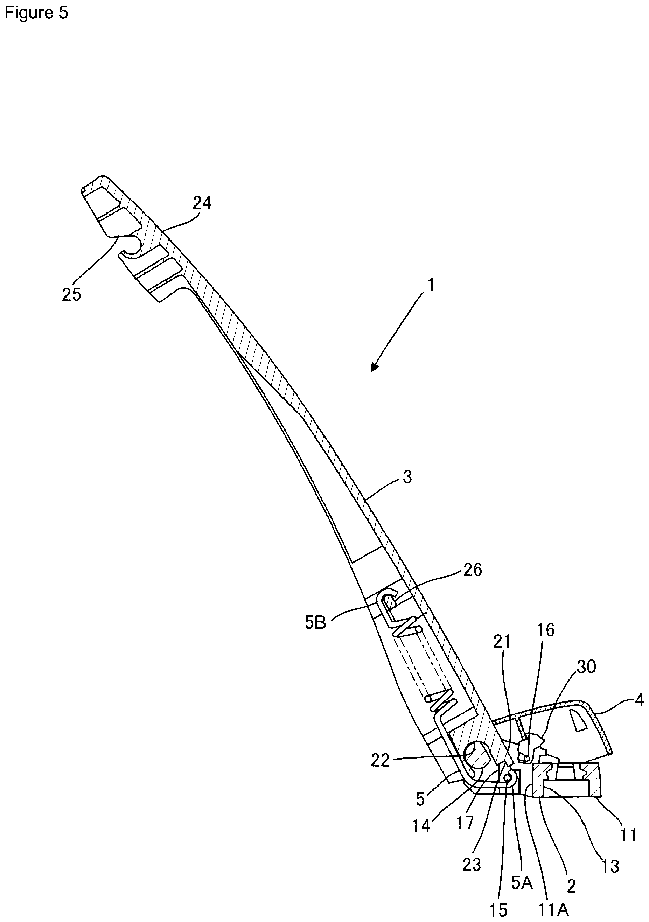

The retainer 3 is an elongated member constituting the main portion of the wiper arm 1 and includes a proximal end section 21 disposed between a pair of head arm sections 12 of the arm head 2 (see Figure 6 etc.). A connection shaft hole 22 is formed in the proximal end section 21 and penetrates the proximal end section 21 in the crosswise direction. The retainer 3 is pivotally connected to the arm head body 2 by fitting the connection shaft 14 of the arm head body 2 into the connection shaft hole 22. With this construction, the retainer 3 is capable of rotating around the connection shaft 14 between an operational position (shown in Figure 1 and Figure 2) in which the retainer 3 extends substantially in the horizontal direction from the arm head body 2 and an upright position (shown in Figure 5) in which the retainer 3 is raised to be upright relative to the arm head body 2.

An abutting step section 23 is formed in the trailing edge of the proximal end section 21 of the retainer 3 and is a notch having a step shape and facing downward. The abutting step section 23 is a portion against which the rotation restricting member 30 contacts so as to restrict the rotation of the retainer 30, as will be described in detail later.

A retaining concavity 25 is provided in a distal end portion 24 of the retainer 3. A wiper blade (not shown) is attached to the retaining concavity 25 so that the wiper arm 1 retains the wiper blade.

The return spring 5 is an extension spring and includes a proximal end section 5A attached to an attaching pin 15 of the arm head body 2 and a distal end portion 5B engaged with an engagement section 26 of the retainer 3. When the retainer 3 is positioned in the vicinity of its operational position, the spring force of the return spring 5 acts to cause the retainer 3 to rotate in the direction toward its operational position (counterclockwise direction in Figure 1 to Figure 5). On the other hand, when the retainer 3 is positioned in the vicinity of its upright position, the spring force of the return spring 5 acts to cause the retainer 3 to rotate in the direction toward its upright position (clockwise direction in Figure 1 to Figure 5).

When using a wiper apparatus (during wiping operation), the retainer 3 is positioned in its operational position sot that a wiper blade (not shown) retained by means of the retainer 3 is disposed along a surface to be wiped (for example, a windshield glass of an automobile). In this condition, the wiper blade is pressed against the surface to be wiped, and if the retainer 3 rotates by a small amount, the return spring 5 applies a pressure to the retainer 3 in a direction in which the retainer 3 is drawn back toward its operational position. With this construction, the wiper blade retained on the distal end portion 24 of the retainer 3 is pressed against the surface to be wiped with a moderate pressing force according to the spring force of the return spring 5.

On the other hand, when washing the automobile, for example, the retainer 3 is disposed in its upright position. As a result, the wiper blade retained by means of the retainer 3 is separated from the surface to be wiped, and the spring force of the return spring 5 acts to hold the retainer 3 in its upright position. With this construction, the wiper arm 1 is locked in an arrangement (referred to as "locked back condition") in which the retainer 3 is held in its upright position.

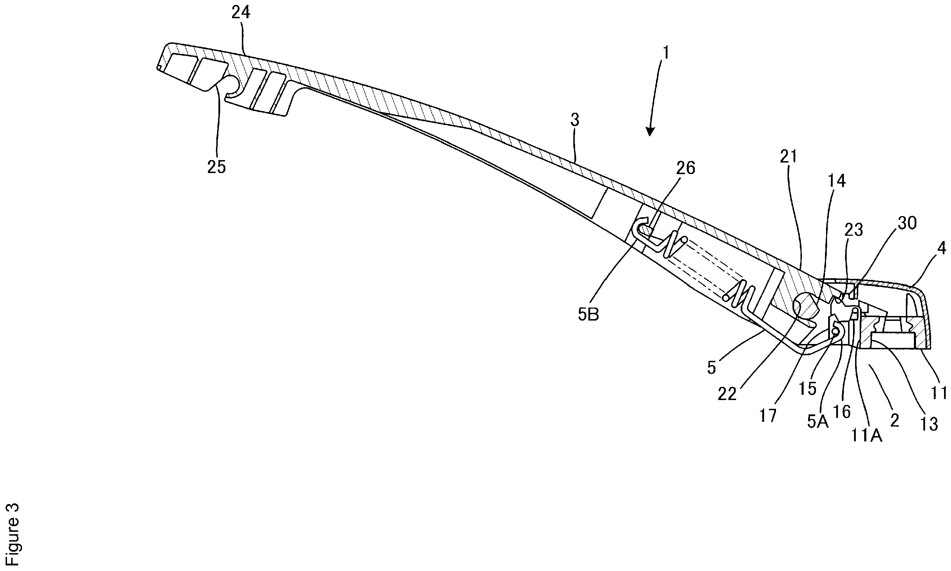

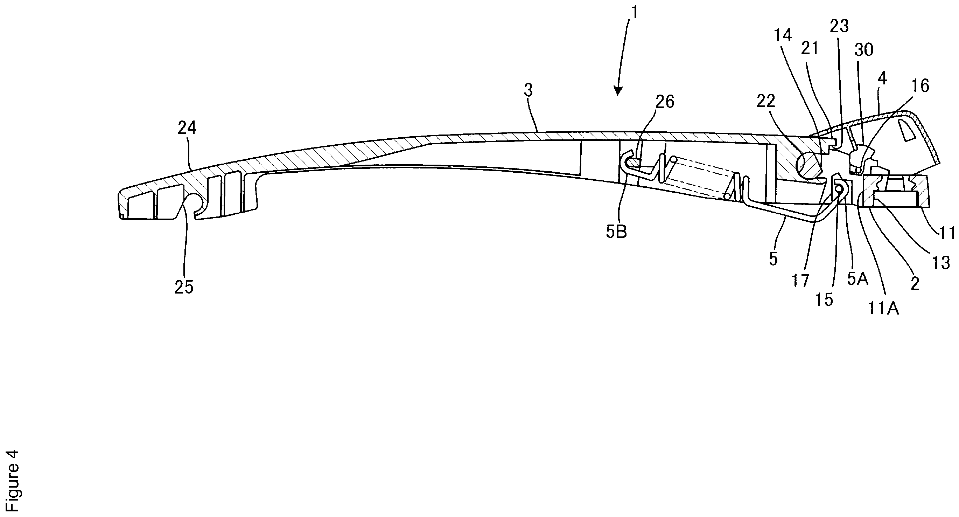

The wiper arm 1 of the present embodiment includes the rotation restricting member 30 for restricting the rotation of the retainer 3 within a predetermined range. The rotation restricting member 30 is pivotably connected to pivot shafts 16 provided in the arm head body 2 and is rotatable around the pivot shafts 16 to be positioned in a rotation restricting position as shown in Figure 1 and Figure 3 and a rotation permitting position as shown in Figure 4 and Figure 5.

When the rotation restricting member 30 is positioned in its rotation restricting position, the rotation restricting member 30 extends along the longitudinal direction of the wiper arm 1, is disposed adjacent to the retainer 3, and is mounted on pedestal sections 17 provided in the arm head body 2. With this construction, when the retainer 3 rotates by a predetermined angle as shown in Figure 3, the abutting step section 23 formed in the trailing edge of the retainer 3 is brought into contact with the rotation restricting member 30 so that the rotation of the retainer 3 is restricted so as not to exceed a predetermined rotation angle. When the rotation restricting member 30 is positioned in its rotation restricting position, the head cover 4 can be fully mounted on the arm head body 2 so as to cover the entirety of the arm head body 2.

On the other hand, when the rotation restricting member is positioned in its rotation permitting position, the rotation restricting member 30 is raised upright relative to the longitudinal direction of the wiper arm 1 and is disposed in a position separated from the retainer 3. As a result, the retainer 3 does not come into contact with the rotation restricting member 30 when rotating, and the rotation of the retainer 3 is not restricted by the rotation restricting member 30. Accordingly, the retainer 3 can rotate as far as its upright position as shown in Figure 5. When the rotation restricting member 30 is positioned in its rotation permitting position, the head cover 4 is shifted upward in order to create a space in which the rotation restricting member 30 is rotatable toward the upper direction.

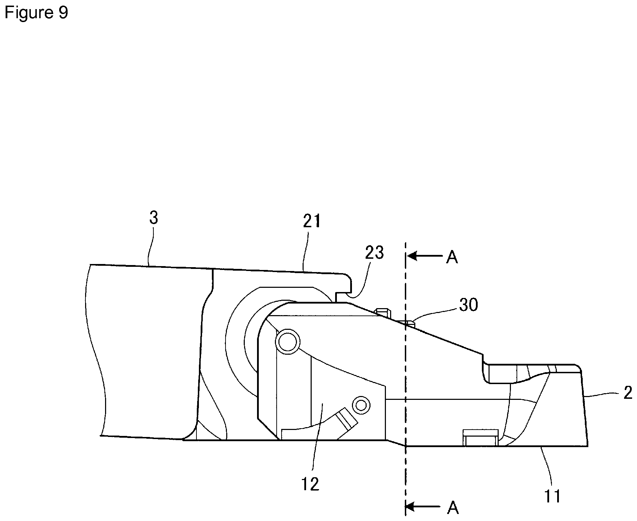

The rotation restricting member 30 of the wiper arm 1 of the present embodiment and the construction relating to the rotation restricting member 30 will now be described in more detail with reference to Figure 6 to Figure 10.

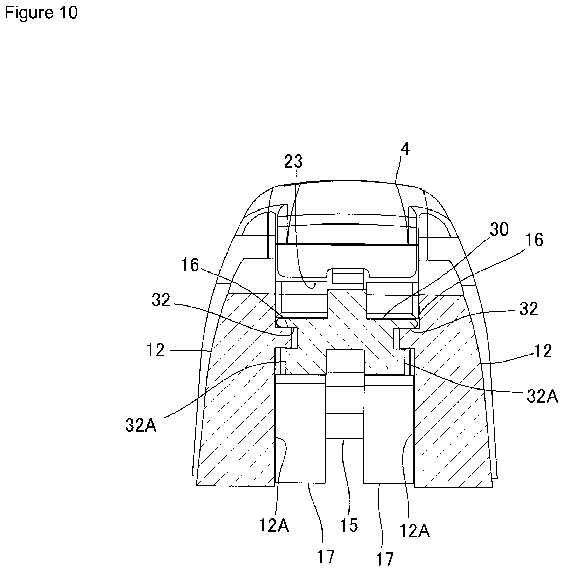

Figure 6 shows the proximal end portion of the wiper arm 1 to which the rotation restricting member 30 is not mounted. As shown in Figure 6, each of the head arm sections 12 is provided on a corresponding side of the both sides of the arm head body 2 and includes the pivot shaft 16 formed as a protruding portion protruding in the lateral direction from an inner surface 12A of the respective head arm section 12. As described above, the rotation restricting member 30 is pivotably connected to the pivot shafts 16 (see Figure 10 etc.).

The arm head body 2 includes left and right pedestal sections 17 between the head arm sections 12. The pedestal sections 17 are portions for supporting the rotation restricting member 30 from underneath and are disposed approximately parallel to the head arm sections 12 to form a predetermined clearance between the pedestal sections 17. The attaching pin 15 is bridged between the pedestal sections 17, and the distal end portion 5B of the return spring 5 is attached to the attaching pin 15.

A fitting protrusion 17B is formed in a portion of the top surface 17A of each pedestal section 17 and is raised upwardly. As will be described later, each of the fitting protrusions 17B are adapted to fit into a fitting concavity 34 formed in the rotation restricting member 30 when the rotation restricting member 30 is mounted on the pedestal sections 17.

The pedestal sections 17 function as pedestals on which the rotation restricting member 30 is mounted. When the retainer 3 is disposed in its upright position, the proximal end section 21 of the retainer 3 is in contact with the pedestal sections 17, and therefore the pedestal sections 17 also function as supporting members for holding the retainer 3 appropriately in its upright position. A conventional wiper arm without the rotation restricting member 30 includes a member for supporting the retainer 3 similarly to the pedestal sections 17. In this embodiment, the pedestal sections 17 are adapted to function also as pedestals supporting the rotation restricting member 30. Accordingly, this invention requires minimal structural changes from a conventional wiper arm.

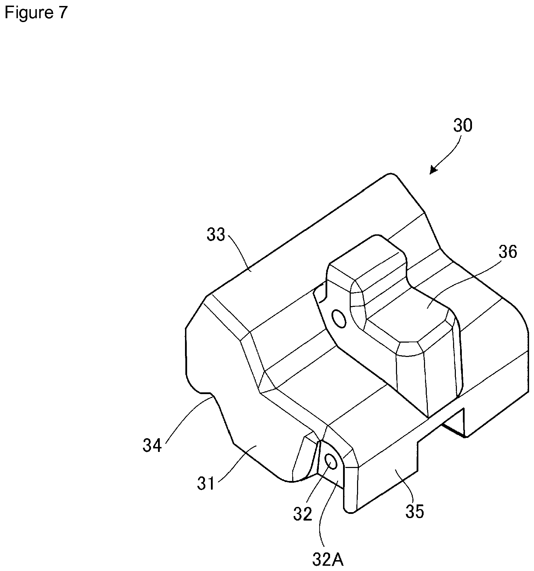

Figure 7 shows the rotation restricting member 30 in detail. As shown, the rotation restricting member 30 includes side surfaces 31 on both sides thereof. The breadth (the interval between the side surfaces 31) of the rotation restricting member 30 is approximately equal to the interval between the head arm sections 12 of the arm head body 2.

A pivot shaft hole 32 is formed in the vicinity of a trailing edge of each of the side surfaces 31 the rotation restricting member 30. Each of the pivot shafts 16 of the arm head body 2 are adapted to fit into the corresponding pivot shaft hole 32. Approximately U-shaped concavities 32A are formed in the areas surrounding the pivot shaft holes 32. Each of concavities 32A includes an open end formed in the lower-side portion of the concavity 32A. Figure 7 shows only one of the side surfaces 31 and one of the pivot shaft holes 32.

An abutting protrusion section 33 is formed in the vicinity of the leading edge of the rotation restricting member 30 and extends upward from the top surface of the rotation restricting member 30. The abutting protrusion section 33 is a portion which contacts against the abutting step section 23 of the retainer 3 when the rotation restricting member 30 is in its rotation restricting position and has an angular shape adapted to fit into the abutting step section 23 of the retainer 3.

The fitting concavity 34 is formed on the lower side in the vicinity of the leading edge of the rotation restricting member 30. The fitting concavity 34 is adapted to fit to the fitting protrusions 17B of the pedestal sections 17 when the rotation restricting member 30 is mounted on the pedestal sections 17 of the arm head body 2. Although this embodiment discloses the fitting concavity 34 provided in the rotation restricting member 30 and the fitting protrusions 17B provided on the pedestal sections 17, a fitting protrusion can be formed in the rotation restricting member 30 while fitting concavities can be formed in the pedestal sections 17.

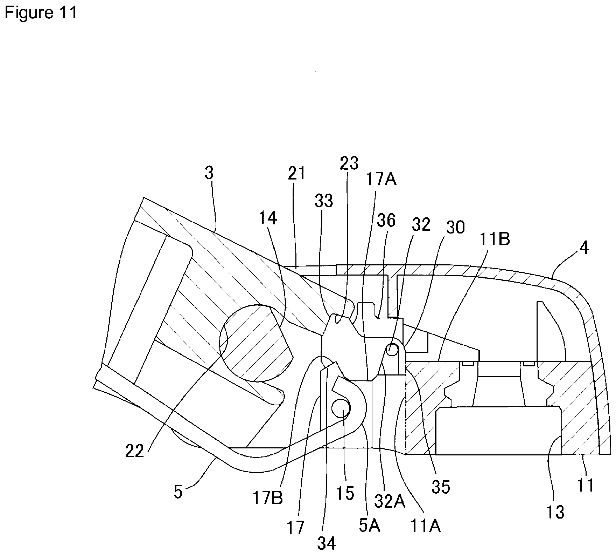

A flat rear end surface 35 is provided at the trailing edge of the rotation restricting member 30. The rear end surface 35 is a portion which contacts against the support surface 11A of the head base portion 11 of the arm head body 2 when the rotation restricting member 30 is in its rotation restricting position (see Figure 11).

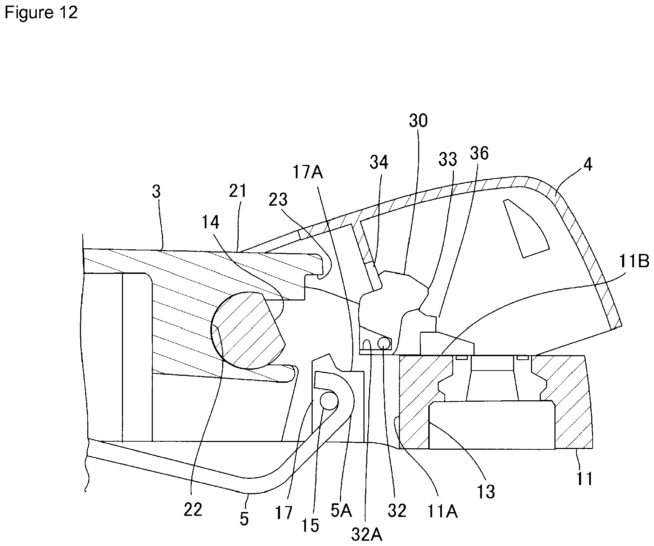

An extended portion 36 is formed on the top surface of the rotation restricting member 30 and extends upwardly. The extended portion 36 contacts against the top surface of the head base portion 11 when the rotation restricting member 30 is disposed in its rotation permitting position and is adapted to hold the rotation restricting member 30 in its rotation permitting position (see Figure 12 etc.).

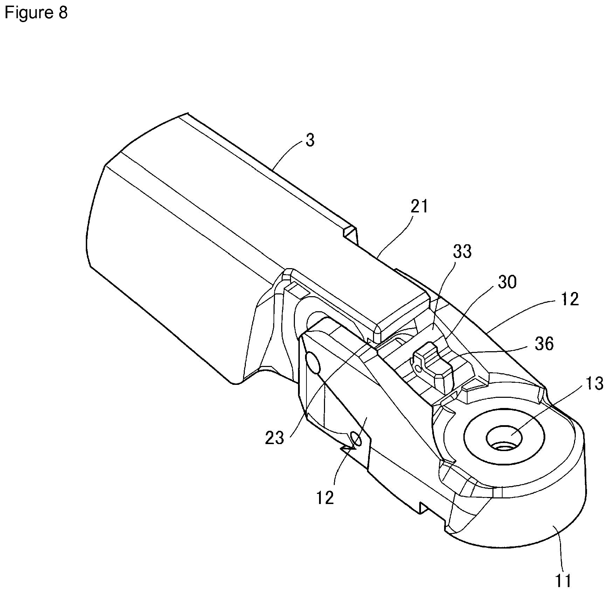

Figure 8 to Figure 10 show the rotation restricting member 30 mounted on the arm head body 2. As shown, each of the pivot shafts 16 on both sides of the arm head body 2 fits into the corresponding pivot shaft hole 32 of the rotation restricting member 30. With this construction, the rotation restricting member 30 is disposed between the head arm sections 12 formed on the both sides of the arm head body 2 and is housed within the inside of the head cover 4. The rotation restricting member is also pivotable around the pivot shaft 16. Since each of the pivot shaft holes 32 is surrounded by the U-shaped concavity 32A having the open end at its lower end, when mounting the rotation restricting member 30 on the arm head body 2, the pivot shafts 16 can be introduced into the pivot shaft holes 32 through the open ends of the respective concavities 32A. Accordingly, the rotation restricting member 30 can be easily attached to and detached from the arm head body 2.

The operation of the wiper arm 1 of the present embodiment will now be described with reference to Figure 11 to Figure 13.

To restrict the rotation angle of the retainer 3 within a predetermined angle (namely, to prevent the wiper arm 1 from moving into its locked back condition), the rotation restricting member 30 is disposed in its rotation restricting position as shown in Figure 11. The rotation restricting member 30 in its the rotation restricting position is disposed along the longitudinal direction of the wiper arm 1 and is mounted on the top surfaces 17A and the fitting protrusions 17B of the pedestal sections 17. In this condition, the fitting concavity 34 of the rotation restricting member 30 fits to the fitting protrusions 17B of the pedestal sections 17, and the rear end face 35 of the rotation restricting member 30 is in contact with the support surface 11A of the head base portion 11 and is supported from its rear side. Accordingly, the rotation restricting member 30 is appropriately retained in the rotation restricting position without wobbling.

The abutting protrusion section 33 of the rotation restricting member 30 is disposed in the retainer 3 side. Accordingly, , if the retainer 3 rotates by a predetermined angle with respect to the arm head 2 as shown in Figure 11, the abutting protrusion section 33 of the rotation restricting member 30 is brought into contact with the abutting step section 23 of the retainer 3 so that the rotation of the retainer 3 angle is prevented so as not to exceed a predetermined angle. Accordingly, while a small amount of the rotation of the retainer 3 accompanied with the operation of the wiper apparatus (an operation to wipe a surface to be wiped) is permitted, the rotation of the retainer 3 beyond the predetermined angle is restricted.

The restricting member 30 in its rotation restricting position is supported from its lower side by means of the pedestal sections 17, namely, by means of the top surfaces 17A and the fitting protrusions 17B of the pedestal sections 17 and is also supported from its rear side by means of the head base portion 11 because the rear end face 35 is in contact with the support surface 11A which is the front surface of the head base portion 11. Accordingly, when restricting the rotation of the retainer 3 by means of the rotation restricting member 30, a component force in a vertical direction (a direction perpendicular to the longitudinal direction of the wiper arm 1) and the component force in the front-and-rear direction (the longitudinal direction of the wiper arm 1) of a force applied to the rotation restricting member 30 from the retainer 3 are appropriately received by means of the pedestal sections 17 and the head base portion 11. Therefore, the rotation restricting member 30 can firmly support the retainer 3 when the rotation of the retainer 3 should be restricted.

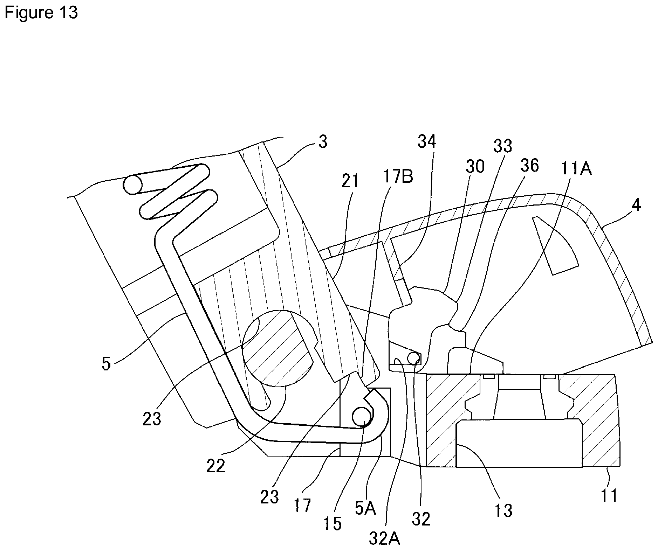

On the other hand, to move the wiper arm 1 into its locked back condition (namely, to move the retainer 3 into its upright position), the rotation restricting member 30 is disposed in its rotation permitting position by rotating the rotation restricting member 30 in the rising direction around the pivot shafts 16,as shown in Figure 12. The rotation restricting member 30 in its rotation permitting position is in raised upright relative to the longitudinal direction of the wiper arm 1 and is separated from the proximal end section 21 of the retainer 3. Accordingly, if the retainer 3 is rotated towards its upright position as shown in Figure 13, the retainer does not contact with the rotation restricting member 30. Therefore, a simple operation of rotating the rotation restricting member 30 enables the wiper arm 1 to move into its lock back arrangement by rotating the retainer 3 to its upright position, as necessary.

When the rotation restricting member is positioned in its rotation permitting position, the extended portion 36 of the rotation restricting member 30 is in contact with the top surface 11B of the head base portion 11 and is thus supported from its lower side. As a result, the rotation restricting member 30 is prevented from rotating from its rotation restricting position and is appropriately held in its rotation restricting position.

When the retainer 3 reaches its upright position, the abutting step section 23 of the proximal end section 21 of the retainer 3 engages with the fitting concavity 17B of the pedestal sections 17. By such engagement, the rotation of the retainer 3 beyond its upright position is inhibited and the position of the retainer 3 is appropriately maintained in its upright position.

As described above, the wiper arm 1 of the present embodiment includes the rotation restricting member 30 for restricting the rotation of the retainer 3 beyond a predetermined angle. The rotation restricting member 30 can be selectively positioned in its rotation restricting position and its rotation permitting position by rotating around the pivot shafts 16 provided in the arm head body 2. Accordingly, while the rotation angle of the retainer 3 is appropriately restricted within the predetermined angle by means the rotation restricting member 30 disposed in its rotation restricting position, the retainer 3 can be rotated to its upright position, as necessary, by rotating the rotation restricting member 30 to its rotation permitting position. Therefore, while it is possible to appropriately prevent any damages of the wiper arm caused by an unintentional movement(occurred when, for example, washing the vehicle) of the retainer 3 toward its locked back condition by restricting the rotation of the retainer 3 within the predetermined limit, the wiper arm 1 can be moved to its locked back condition, as necessary, by carrying out a simple operation of rotating the rotation restricting member 30.

When the rotation restricting member 30 is positioned in its rotation restricting position, the rotation restricting member 30 is mounted on the top surfaces 17Aand the fitting protrusions 17B of the pedestal sections 17, and the fitting concavity 34 fits to the fitting protrusions 17B of the pedestal sections 17. As a result, the rotation restricting member 30 is supported from its below side by means of the top surfaces 17A and the fitting protrusions 17B of the pedestal sections 17. In addition, the rear end face 35 is in contact with the support surface 11A of the head base portion 11 so that the rotation restricting member 30 is supported from its rear side by means of the support surface 11A of the head base portion 11. Accordingly, a component force in a vertical direction (a direction perpendicular to the longitudinal direction of the wiper arm 1) and the component force in the front-and-rear direction (the longitudinal direction of the wiper arm 1) of a force applied to the rotation restricting member 30 from the retainer 3 are appropriately received by the pedestal sections 17 and the head base portion 11. Therefore, sufficient strength is ensured in the structure for rotation restriction, and the rotation restriction can be surely carried out.

When the rotation restricting member 30 is disposed in its rotation restricting position, the head cover 4 can be disposed in a position in which the head cover 4 is completely mounted on the arm head body 2 (a position in which the head cover 4 covers the entirety of the arm head body 2), and the rotation restricting member 30 can be disposed in a position in which the entirely of the rotation restricting member 30 is completely hidden within the inside of the head cover 4 (see Figure 2). Accordingly, the wiper arm 1 with a rotation restricting function can be provided without changing the external appearance of a conventional wiper arm.

The rotation restricting member 30 can be easily attached to or detached from the arm head 2. Accordingly, when the wiper arm 1 is used in an operating environment in which the wiper arm 1 should be permitted to be locked back, the rotation restricting member 30 may be detached from the arm head body 2. Namely, according to the operation environment in which the wiper arm 1 is used, the wiper arm 1 can be formed as a wiper arm which can be locked back or as a wiper arm in which the rotational range of the retainer 3 is restricted by attaching or detaching the rotation restricting member 30 without making any other particular changes to the remaining configuration. Accordingly, users of the wiper arm 1 can freely change the function of the wiper arm 1 by attaching or detaching the rotation restricting member 30 by themselves in accordance with the operational environment in which the wiper arm 1 is used. Thus, the flexibility and the convenience in usage of the wiper arm are improved.

The wiper arm 1 of the present embodiment can be constructed by changing a wiper arm of the conventional structure to include the pivot shafts 16 formed in the head arm sections 12 of the arm head 2 and the rotation restricting member 30 mounted on the pivot shafts 16. Accordingly, the wiper arm 1 functioning to restrict the rotation of the retainer 3 can be provided at a low cost by adding minimum structural changes to a wiper arm of the conventional structure.

When the rotation restricting member 30 is detached from the wiper arm 1 of the present embodiment, the wiper arm 1 is different from a wiper arm of the conventional structure merely in that the pivot shafts 16 as small protruding sections are provided on the inner surfaces 12A of the head arm sections 12 of the arm head 2, and thus has only an extremely minor structural difference with respect to a wiper arm of the conventional structure. Accordingly, with respect to manufacture and sales of wiper arms, it is possible to manufacture only some types of wiper arms each of which includes the pivot shafts 16 of the present invention, and then these types of wiper arms with the rotation restriction members 30 are distributed in markets in which the restriction of the rotation of retainer 3 is required (for example, the European market), while these types of wiper arm without the rotation restriction members 30 are distributed in markets in which the restriction of the rotation of retainer 3 is not required (for example, the Japanese market). Therefore, the cost of manufacturing can be reduced.

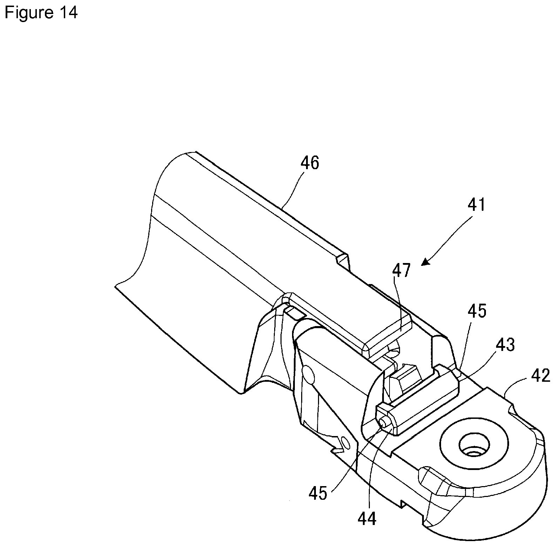

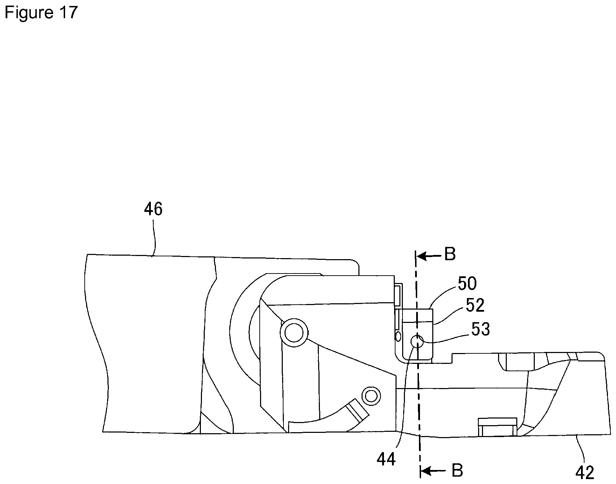

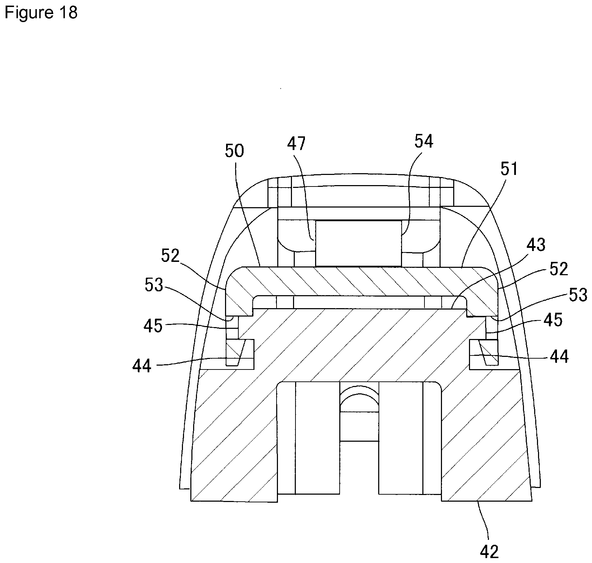

Figure 14 to Figure 18 show a second embodiment of the present invention.

As shown in Figure 14, a wiper arm 41 of the present embodiment includes a mounting section 43 provided on a top surface of an arm head 42. Pivot shafts 45 protruding laterally is provided on a side surface 44 on both sides of the mounting section 43.

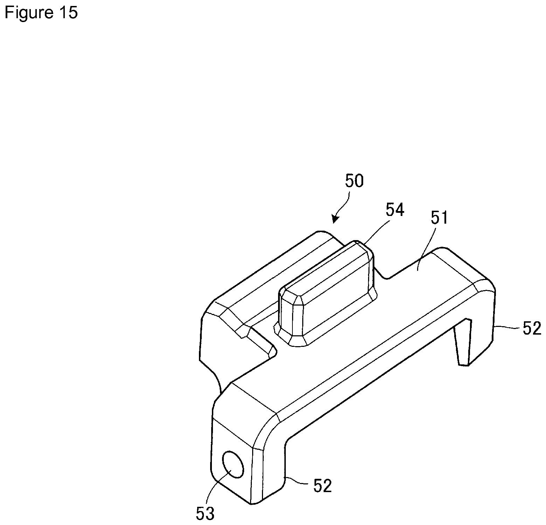

As shown in Figure 15, a rotation restricting member 50 of the present embodiment is an approximately U-shaped member and includes a top surface section 51 and a pair of side surface sections 52 extending downward from the both sides of the top surface section 51. Each of the side surface sections 52A includes a pivot shaft hole 53. An abutting protrusion section 54 extends upward from the top surface section 51.

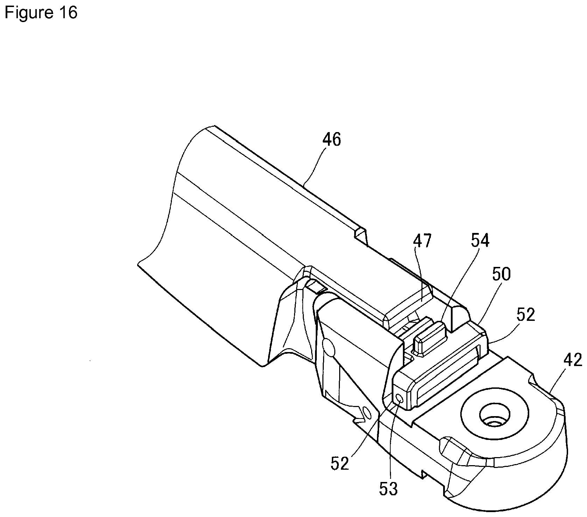

Figure 16 to Figure 18 show the rotation restricting member 50 mounted on the mounting section 43. As shown, the pivot shafts 45 formed on the left and right sides of the mounting section 43 fit into the pivot shaft holes 53 formed on the left and right sides of the rotation restricting member 50, respectively. With this construction, the rotation restricting member 50 is pivotably connected with the mounting section 43 and is rotatable around the pivot shafts 45. Accordingly, the rotation restricting member 50 is rotatable between a rotation restricting position in which the rotation restricting member is upright as shown in Figure 16 to Figure 18 and a rotation permitting position (not shown in the drawings) in which the rotation restricting member 50 falls down by rotating in a direction away from a retainer 46.

When the rotation restricting member 50 is in its rotation restricting position, the abutting protrusion section 54 of the rotation restricting member 50 is disposed adjacent to the retainer 46 so that, if the retainer 3 is rotated by a predetermined angle, a rear-end section 47 of the retainer 3 is brought into contact with the protruding section 54 of the rotation restricting member 50. Thus, the rotation of the retainer 3 is appropriately restricted within a predetermined angle.

On the other hand, when the rotation restricting member 50 is rotated to the rotation permitting position, the protruding section 54 of the rotation restricting member 50 is disposed apart from the rear end section 47 of the retainer 46 so that, if the retainer 46 rotates towards its upright position, the protruding section 54 does not contact with the retainer 46. Therefore, the wiper arm 41 can be locked back by rotating the retainer 46 to its upright position.

As shown in this embodiment, similar operations and advantageous effects as those of the first embodiment can be obtained by using the rotation restricting member 50 which is mounted on the pivot shafts 45 and extends outward from the mounting section 43.

### [List of Reference Numerals]

- 1: wiper arm
- 2: arm head body
- 3: retainer
- 4: head cover
- 5: return spring
- 11: head base portion
- 11A: support surface of head base portion
- 11B: top surface of head base portion
- 12: head arm section
- 13: drive shaft hole
- 14: connection shaft
- 15: attaching pin
- 16: pivot shaft
- 17: pedestal section
- 17A: top surface of pedestal section
- 17B: fitting protrusion of pedestal section
- 21: proximal end section of retainer
- 22: connection shaft hole
- 23: abutting step section of retainer
- 24: distal end portion of retainer
- 25: retaining concavity
- 26: attaching section
- 30: rotation restricting member
- 31: side surface of rotation restricting member
- 32: pivot shaft hole
- 32A: concavity
- 33: abutting protrusion section of rotation restricting member
- 34: fitting concavity of rotation restricting member
- 35: rear end face of rotation restricting member
- 36: extended portion of rotation restricting member
- 41: wiper arm
- 42: arm head
- 43: mounting section
- 44: side surface of mounting section
- 45: pivot shaft
- 46: retainer
- 47: rear end section of retainer
- 50: rotation restricting member
- 51: top surface section of rotation restricting member
- 52: side surface section of rotation restricting member
- 53: pivot shaft hole
- 54: abutting protrusion section of rotation restricting member

## Claims

1. A wiper arm (1) comprising an arm main body (3) capable of retaining a wiper blade, and an arm head (2,4) pivotably connected to the arm main body (3) through a connecting shaft (14) so that the arm main body (3) is pivotable between an operational position and an upright position,
the wiper arm (1) further comprising a rotation restricting member (30) pivotally connected to the arm head (2,4) through a pivot shaft (16), said rotation restricting member (30) being pivotable around the pivot shaft (16) to be selectively positioned between a rotation restricting position and a rotation permitting position,
wherein said rotation restricting member (30) contacts with the arm main body (3) so as to restrict the rotation angle of the arm main body (3) when disposed in said rotation restricting position, while said rotation restricting member (30) does not restrict the rotation angle of the arm main body (3) when disposed in said rotation permitting position,
**characterized in that** said arm head (2,4) comprises a pedestal section (17) on which said rotation restricting member (30) is mounted when said rotation restricting member (30) is in said rotation restricting position, said pedestal section (17) supporting a component force in a direction perpendicular to the longitudinal direction of said wiper arm (1) of a force exerted on said rotation restricting member (30) from said arm main body (3) when the rotation of the arm main body (3) is restricted, and
that said arm head (2,4) comprises an arm head body (2) and a head cover (4) covering the arm head body (2), and said rotation restricting member (30) is housed within the inside of said head cover (4).

2. The wiper arm according to claim 1, further comprising a fitting protrusion (34) formed on one of said rotation restricting member (30) and said pedestal section (17), and a fitting concavity (17B) formed in the other one of said rotation restricting member (30) and said pedestal section (17), said fitting protrusion (34) adapted to be fit into said fitting concavity (17B) when said rotation restricting member (30) is disposed in said rotation restricting position.

3. The wiper arm according to claim 1 or claim 2, wherein said arm head (2,4) comprises a support surface (11A) being approximately perpendicular to the longitudinal direction of the wiper arm (1), said rotation restricting member (30) contacting said support surface (11A) when said rotation restricting member (30) is disposed in said rotation restricting position so that said support surface (11A) supports a component force in a direction perpendicular to the longitudinal direction of said wiper arm (1) of a force exerted on said rotation restricting member (30) from said arm main body (3) when the rotation of the arm main body (3) is restricted.

4. The wiper arm according to any one of claims 2 to 3, wherein said pedestal section (17) is adapted to retain said arm main body (3) in said upright position by contacting with said arm main body (3) when said arm main body (3) is positioned in said upright position.

5. The wiper arm according to any one of claims 1 to 4, wherein said arm head (2) comprises a pair of head arm sections (12) disposed in the both sides of the proximal end section (21) of said arm main body (3), and said pivot shaft (16) is provided on each of the inside surfaces of said pair of head arm sections (12).

6. The wiper arm according to claim 1, wherein said arm head (42) comprises a mounting section (43) on which the rotation restricting member (50) is mounted, and said pivot shaft (16) is provided on each of the both side surfaces (44) of said mounting section (43).

7. The wiper arm according to any one of claims 1 to 6, wherein said rotation restricting member (30) is detachably attached to said arm head (2,4).

8. The wiper arm according to any one of claims 1 to 7, wherein said head cover (4) is adapted to cover the entirety of said arm head body (3) when said rotation restricting member (30) is disposed in said rotation restricting position.

## Patentansprüche

1. Wischerarm (1), umfassend einen Armhauptkörper (3), der ein Wischerblatt halten kann, und einen Armkopf (2, 4), der durch einen Verbindungsschaft (14) schwenkbar mit dem Armhauptkörper (3) verbunden ist, sodass der Armhauptkörper (3) zwischen einer Betriebsposition und einer aufrechten Position schwenkbar ist,
wobei der Wischerarm (1) ferner ein Drehbegrenzungselement (30) umfasst, das durch eine Schwenkachse (16) schwenkbar mit dem Armkopf (2, 4) verbunden ist, wobei das Drehbegrenzungselement (30) um die Schwenkachse 16) schwenkbar ist, um selektiv zwischen einer Drehbegrenzungsposition und einer eine Drehung erlaubenden Position positioniert zu werden,
wobei das Drehbegrenzungselement (30) mit dem Armhauptkörper (3) in Berührung steht, um den Drehwinkel des Armhauptkörpers (3) zu begrenzen, wenn er in der Drehbegrenzungsposition angeordnet ist, während das Drehbegrenzungselement (30) den Drehwinkel des Armhauptkörpers (3) nicht begrenzt, wenn er in der eine Drehung erlaubenden Position angeordnet ist,
**dadurch gekennzeichnet, dass** der Armkopf (2, 4) ein Sockelteil (17) umfasst, auf dem das Drehbegrenzungselement (30) montiert ist, wenn das Drehbegrenzungselement (30) sich in der Drehbegrenzungsposition befindet, wobei das Sockelteil (17) eine Teilkraft in eine Richtung unterstützt, die senkrecht zu der Längsrichtung des Wischerarms (1) einer Kraft verläuft, die von dem Armhauptkörper (3) auf das Drehbegrenzungselement (30) ausgeübt wird, wenn die Drehung des Armhauptkörpers (3) begrenzt ist, und
dass der Armkopf (2, 4) einen Armkopfkörper (2) und eine Kopfabdeckung (4), die den Armkopfkörper (2) abdeckt, umfasst und das Drehbegrenzungselement (30) im Inneren der Kopfabdeckung (4) untergebracht ist.

2. Wischerarm nach Anspruch 1, ferner umfassend einen Passungsvorsprung (34), der auf einem aus dem Drehbegrenzungselement (30) und dem Sockelteil (17) ausgebildet ist, und eine Passungsvertiefung (17B), die in dem anderen aus dem Drehbegrenzungselement (30) und dem Sockelteil (17) ausgebildet ist, wobei der Passungsvorsprung (34) geeignet ist, um in die Passungsvertiefung (17B) eingepasst zu werden, wenn das Drehbegrenzungselement (30) in der Drehbegrenzungsposition angeordnet ist.

3. Wischerarm nach Anspruch 1 oder Anspruch 2, wobei der Armkopf (2, 4) eine Auflagefläche (11A) umfasst, die annähernd senkrecht zu der Längsrichtung des Wischerarms (1) verläuft, das Drehbegrenzungselement (30) die Auflagefläche (11A) berührt, wenn das Drehbegrenzungselement (30) in der Drehbegrenzungsposition angeordnet ist, sodass die Auflagefläche (11A) eine Teilkraft in eine Richtung senkrecht zu der Längsrichtung des Wischerarms (1) einer Kraft unterstützt, die von dem Armhauptkörper (3) auf das Drehbegrenzungselement (30) ausgeübt wird, wenn die Drehung des Armhauptkörpers (3) begrenzt ist.

4. Wischerarm nach einem der Ansprüche 2 bis 3, wobei das Sockelteil (17) geeignet ist, um den Armhauptkörper (3) in der aufrechten Position durch In-Kontakt-Bringen mit dem Armhauptkörper (3) zu halten, wenn der Armhauptkörper (3) in der aufrechten Position positioniert ist.

5. Wischerarm nach einem der Ansprüche 1 bis 4, wobei der Armkopf (2) ein Paar Kopfarmabschnitte (12) umfasst, das in den beiden Seiten des proximalen Endabschnitts (21) des Armhauptkörpers (3) angeordnet ist, und die Schwenkachse (16) auf jeder der Innenflächen des Paares Kopfarmabschnitte (12) bereitgestellt ist.

6. Wischerarm nach Anspruch 1, wobei der Armkopf (42) einen Befestigungsabschnitt (43) umfasst, auf dem das Drehbegrenzungselement (50) montiert ist, und die Schwenkachse (16) auf jeder der beiden Seitenflächen (44) des Befestigungsabschnitts (43) bereitgestellt ist.

7. Wischerarm nach einem der Ansprüche 1 bis 6, wobei das Drehbegrenzungselement (30) abnehmbar an dem Armkopf (2, 4) befestigt ist.

8. Wischerarm nach einem der Ansprüche 1 bis 7, wobei die Kopfabdeckung (4) geeignet ist, um die Gesamtheit des Armhauptkörpers (3) zu bedecken, wenn das Drehbegrenzungselement (30) in der Drehbegrenzungsposition angeordnet ist.

## Revendications

1. Bras d'essuie-glace (1) comprenant un corps principal de bras (3) capable de retenir un balai d'essuie-glace, et une tête de bras (2, 4) reliée de manière pivotante au corps principal de bras (3) par l'intermédiaire d'un arbre de liaison (14) de sorte que le corps principal de bras (3) peut pivoter entre une position opérationnelle et une position verticale,
le bras d'essuie-glace (1) comprenant en outre un élément de restriction de rotation (30) relié de manière pivotante à la tête de bras (2, 4) par l'intermédiaire d'un arbre de pivot (16), ledit élément de restriction de rotation (30) pouvant pivoter autour de l'arbre de pivot (16) pour être positionné de manière sélective entre une position de restriction de rotation et une position d'autorisation de rotation,
dans lequel ledit élément de restriction de rotation (30) entre en contact avec le corps principal de bras (3) de manière à restreindre l'angle de rotation du corps principal de bras (3) lorsqu'il est disposé dans ladite position de restriction de rotation, tandis que ledit élément de restriction de rotation (30) ne restreint pas l'angle de rotation du corps principal de bras (3) lorsqu'il est disposé dans ladite position d'autorisation de rotation,
**caractérisé en ce que** ladite tête de bras (2, 4) comprend une section de socle (17) sur laquelle ledit élément de restriction de rotation (30) est monté lorsque ledit élément de restriction de rotation (30) est dans ladite position de restriction de rotation, ladite section de socle (17) supportant une force composante dans une direction perpendiculaire à la direction longitudinale dudit bras d'essuie-glace (1) d'une force exercée sur ledit élément de restriction de rotation (30) à partir dudit corps principal de bras (3) lorsque la rotation du corps principal de bras (3) est restreinte, et
**en ce que** ladite tête de bras (2, 4) comprend un corps de tête de bras (2) et un couvercle de tête (4) recouvrant le corps de tête de bras (2), et ledit élément de restriction de rotation (30) est logé à l'intérieur dudit couvercle de tête (4).

2. Bras d'essuie-glace selon la revendication 1, comprenant en outre une saillie d'ajustement (34) formée sur l'un dudit élément de restriction de rotation (30) et de ladite section de socle (17), et une concavité d'ajustement (17B) formée dans l'autre dudit élément de restriction de rotation (30) et de ladite section de socle (17), ladite saillie d'ajustement (34) étant conçue pour être ajustée dans ladite concavité d'ajustement (17B) lorsque ledit élément de restriction de rotation (30) est disposé dans ladite position de restriction de rotation.

3. Bras d'essuie-glace selon la revendication 1 ou la revendication 2, dans lequel ladite tête de bras (2, 4) comprend une surface de support (11A) étant approximativement perpendiculaire à la direction longitudinale du bras d'essuie-glace (1), ledit élément de restriction de rotation (30) entrant en contact avec ladite surface de support (11A) lorsque ledit élément de restriction de rotation (30) est disposé dans ladite position de restriction de rotation de sorte que ladite surface de support (11A) supporte une force composante dans une direction perpendiculaire à la direction longitudinale dudit bras d'essuie-glace (1) d'une force exercée sur ledit élément de restriction de rotation (30) à partir dudit corps principal de bras (3) lorsque la rotation du corps principal de bras (3) est restreinte.

4. Bras d'essuie-glace selon l'une quelconque des revendications 2 et 3, dans lequel ladite section de socle (17) est conçue pour retenir ledit corps principal de bras (3) dans ladite position verticale par contact avec ledit corps principal de bras (3) lorsque ledit corps principal de bras (3) est positionné dans ladite position verticale.

5. Bras d'essuie-glace selon l'une quelconque des revendications 1 à 4, dans lequel ladite tête de bras (2) comprend une paire de sections de bras de tête (12) disposées des deux côtés de la section d'extrémité proximale (21) dudit corps principal de bras (3), et ledit arbre de pivot (16) est prévu sur chacune des surfaces intérieures de ladite paire de sections de bras de tête (12).

6. Bras d'essuie-glace selon la revendication 1, dans lequel ladite tête de bras (42) comprend une section de montage (43) sur laquelle l'élément de restriction de rotation (50) est monté, et ledit arbre de pivot (16) est prévu sur chacune des deux surfaces latérales (44) de ladite section de montage (43).

7. Bras d'essuie-glace selon l'une quelconque des revendications 1 à 6, dans lequel ledit élément de restriction de rotation (30) est fixé de manière amovible à ladite tête de bras (2, 4).

8. Bras d'essuie-glace selon l'une quelconque des revendications 1 à 7, dans lequel ledit couvercle de tête (4) est conçu pour recouvrir la totalité dudit corps de tête de bras (3) lorsque ledit élément de restriction de rotation (30) est disposé dans ladite position de restriction de rotation.
